# EUROPEAN PATENT SPECIFICATION

(11) **EP 3 488 679 B1**
(45) Date of publication and mention of the grant of the patent: **23.06.2021**
(21) Application number: 17203784.8
(22) Date of filing: 27.11.2017
(51) Int. Cl.: A01D 34/54

(54) **MOWING DEVICE**
MÄHVORRICHTUNG
DISPOSITIF DE TONTE

(43) Date of publication of application: 29.05.2019
(73) Proprietor: Lely Patent N.V., 3147 PB Maassluis (NL)
(72) Inventor: REIJERSEN VAN BUUREN, Willem Jacobus, 3147PB MAASSLUIS (NL)
(74) Representative: Octrooibureau Van der Lely N.V.

(56) References cited:
- EP-A1- 1 709 859
- EP-A2- 2 340 701

## Description

The present invention relates to a mower system for mowing a field with a grass containing crop, and comprising a frame, and a mowing device that is connected to the frame and has an adjustable mowing height.

A mower system wherein the mower has an adjustable mowing height is widely known. It is also known in literature that the mowing height influences the regrowth of the mown crop, and that this may differ between crops.

In practice, this knowledge is used far from optimum when managing the crop.

EP1709859A1 discloses a mowing head with a contactless operating sensor for sensing the soil in front of the mowing head. The obtained signal is used for controlling the height of the mowing head relative to the soil. The signal can also be used to determine the thickness of the crop in front of the mowing head.

It is an object of the present invention to provide an improved mower system that uses the knowledge to optimise the management of a crop that contains grass on a field. Herein, optimising may be understood to comprise the composition of the crop.

The invention achieves this object with a mower system according to claim 1, in particular a mower system for mowing a field with a grass containing crop, and comprising a frame, a mowing device that is connected to the frame and has an adjustable mowing height, a sensor device arranged to sense a species composition related parameter of a part of the field, and to generate data based on the sensed parameter, a control device that is operatively connected to the sensor device to receive the generated data, and is operatively connected to the mowing device and arranged to adjust the mowing height on the basis of the received data.

The invention is based on the following insight. Up to now, in virtually every case the mowing height was set once for all of the field. This does not allow control over the regrowth properties across the field, and might in fact lead to undesired regrowth, or contrarily to too little regrowth of the desired crop. Now, according to the invention, the mowing height is set based on a measured property, and the originally set mowing height may now be adjusted based on that measured property. This allows a much tighter and dynamic control over the regrowth properties of the crop.

In particular, grass is often mixed with clover, alfalfa or other forage legumes used for animal feed. This is done e.g. to improve grass growth due to their nitrogen fixating properties, but also since they provide forage crop themselves. Furthermore, growing such mixture also improves the nutritional state of the land, which is useful if after the grass - legume mixture some other crop is grown such as corn or vegetables. These other, later crops require less fertiliser for the same yield when previously it was covered with a grass - legume mixture. However, the ratio between grass and legume should be within certain bounds for an optimum result. Not only could a too high percentage of the legume cause the grass to grow less, but it may also lead to a decrease in the animal feed quality of the total forage crop, such as a too low nutritive value, a too high proteine content or the like, which is neither compensated by a better crop yield for a subsequent crop.

Thus, controlling the ratio is desirable, which is possible with the mower system of the invention, in that this may change the mowing height. E.g. mowing not too low favours regrowth of the grass, while mowing lower favours regrowth of clover. All this is elucidated further below.

In the present invention, the sensor device may be provided on the mower itself, or be a separate device, as long as the data is passed on to the mower. For example, the sensor device may be provided on a drone or other UAV, or on a separate vehicle, such as an AGV. Furthermore, "data" is deemed to comprise both "information" and "a signal". That is, the sensor device may process the value of the sensed parameter into information, store this information and supply the information for later use, or may pass a sensor signal one-to-one to some external device for processing. Herein, the processing may also comprise turning the signal into the information or may comprise directly controlling the setting of the mowing height based on the signal. For clarity reasons, these possibilities are dealt with as one by using the term data. Moreover, the "adjusting" is considered the same as "setting".

Further embodiments are described in the dependent claims, as well as in the part of the description that follows below.

In particular embodiments, the control device is arranged to adjust the mowing height during mowing the field, in particular repeatedly or continuously on the basis of the received data. In embodiments, the control device is arranged to adjust the mowing height for the part of the field for which the parameter was sensed, i.e. for which the data was generated. This allows the mowing height to be set dynamically and position dependently, based on the sensed parameter. In turn, this allows to control regrowth and thus the ratio of the different plants (in particular grass to forage legume, or others). After all, this ratio will not be the same across all of the field, and having a single mowing height does not do justice to such a variable ratio. By local measurement and control, optimum results may be achieved, in that a too low or too high ratio grass-to-legume may be corrected through setting a suitable mowing height.

In embodiments, the sensor device comprises a camera that generates an image of the piece of the field, and an image processing device that processes the image and generates the data. In embodiments, the image processing device is arranged to recognise at least one forage legume, in particular a clover species and/or alfalfa and/or lucerne, in the image, more in particular also to recognize grass in the image. In embodiments, the species composition related parameter comprises a ratio, in particular a coverage ratio of the field, of at least one of a forage legume, in particular a clover species and/or alfalfa and/or lucerne, to a grass, more in particular wherein the data reflects or comprises the ratio. Such a camera and image processing device provides good and *per se* proven technology for crop recognition. Reference is made to articles by Dr. Thomas Fricke, plant scientist, that describe various techniques to recognise such legumes in images of grass-legume mixtures. Such recognition may be based on the large differences in habitus between grass and legumes such as clover or lucerne. Grass is very slender and has narrow leaves and flowers, while clover has much broader, round leaves, and very recognisable flower heads, of a different colour as well. Nevertheless, any sensor that is able to differentiate between grass and another crop, in particular forage legumes such as clover, are possible.

In embodiments, the sensor device comprises an additional sensor, in particular an ultrasound sensor and/or an optical NIR sensor. Such additional sensor may support the sensing of the species composition related parameter(s). It may also serve to determine the height of the crop, and thus directly or indirectly also of the volume of the crop. Together with the information relating to the species composition, or at least of the ratio therebetween, it is possible to determine the nutritional composition of the mown crop. This may be done by multiplying the local amount of the crop and the percentages of the two or more crops, in particular of grass and legume (clover etc.). This gives the local yield for grass and legume, etc. With knowledge of the nutritional composition of each constituent, the total feed composition may be determined. By adding the local contributions for all of the mown part of the field, the total yield of the crop may also be determined. It is noted that the volume of the crop may be determined based on the image processing as well, since crop density may be determined, based on picture analysis. Alternatively, density information may be derived from mowing power. Together with the height information from the ultrasonic sensor or some other height sensor, total volume may easily be determined. The information thus obtained is very useful in further processing of the feed collected. After all, without knowledge of the constituents grass, legume, ..., the total nutrients, that have different ratios for the various constituents, are not known.

In embodiments, the control device is arranged to contain a desired value or value range for the signal, in particular for the determined parameter value reflected by the data, more in particular for the ratio, to compare the data, in particular the determined parameter value, more in particular the ratio, and the desired value or value range, and to adjust the mowing height on the basis of the comparison. As indicated above, adjusting the mowing height such that a desired ratio or other species composition related parameter is achieved, is useful in the management of the crop, since that influences crop regrowth, nutritional value of the crop and even of the soil. Thus, by adjusting towards a desired value or value range, by comparison of measured and desired values, the crop management may be improved. Hereto, the desired value or value range may be contained in a memory that is either programmable or fixed, or may even be hardwired into the control device.

In embodiments, the control device is arranged to adjust the mowing height to a first mowing height value if the determined ratio is lower than a predetermined low threshold value, and to adjust the mowing height to a second mowing height value if the determined ratio is higher than a predetermined high threshold value, wherein the first mowing height is lower than the second mowing height. As already pointed out above, the differences in regrowth properties make it possible to influence that regrowth by adjusting the mowing height to what crop ratio is desired. Then, by setting thresholds, a simpel control mechanism is obtained for setting mowing height. Alternatively, a more complex setting mechanism could be designed. For example, the control device is arranged to adjust the mowing height to a mathematical function of the determined ratio. That mathematical function may be selected depending on the regrowth properties of the particular crops on the field.

In embodiments, the first mowing height is lower than 6 cm, in particular about 5 cm, and wherein the second mowing height is higher than 6 cm, in particular about 7 cm. An often used mixture of crops is grass, in particular *Lolium perenne or* x *hybridum, Festuca arundinacea,* x Festulolium or *Dactylis glomerata,* and clover, in particular *Trifolium pratense* and *T. repens,* and their cultivars. Such clover shows a better regrowth than grass at lower mowing heights, such as 5 cm rounded off, while it is the other way around at higher mowing heights, such as about 7 cm rounded off, in each case above ground level. Of course, other heights may be used as well, depending on the specific type of crop, and the desired effects.

In embodiments, the mower is a towable mower, arranged to be towed behind a towing vehicle. An advantage hereof is that the sensor(s) and/or control(s) for evaluating the sensor data may be provided on the towing vehicle. This provides a distance, and thus an effective time delay, between the sensor and its determination of the species composition related parameter value, such as species ratio, with respect to the mower and the setting of the mowing height thereof. This allows the software some more time to do the calculations, and the mower to set the height correctly. However, it is also possible to use data/information that was collected previously with some other device, or even from aerial or satellite pictures, as long as the setting of the mowing height is adjusted position dependently, based on said data/information.

In other embodiments, the mower is an autonomous mower, and comprises a propelling system for propelling the mower over the field. For such embodiments, the mowing speed is often lower, and there is more time for setting the mowing height. Note that autonomous mowers will be able to mow more often than man-operated mowers. In this way, they can exert more, and a tighter, control over the composition of the crop. After all, in extreme cases it may make sense to mow more often, in an earlier stage. Of course, since regrowth is not instantaneous, there are natural upper limits to the mowing frequency, apart from economical or efficiency limits.

The invention will now be elucidated by means of some non-limiting embodiment in the drawing, in which:
- Figure 1 is a very diagrammatic side view of a system according to the invention, and
- Figure 2 is a very diagrammatic top view of a system according to the invention.

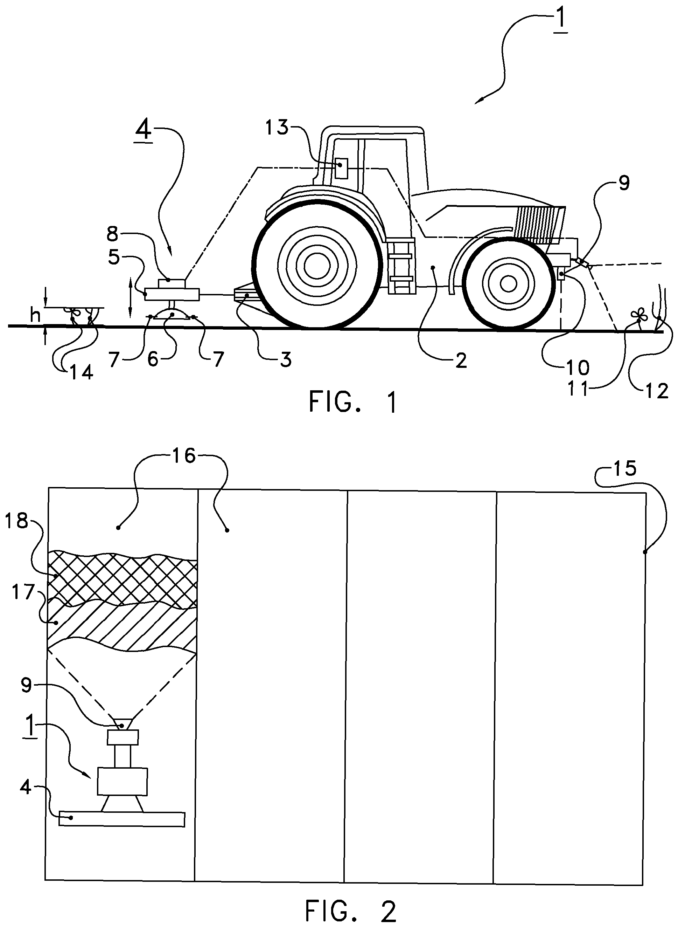

Figure 1 is a very diagrammatic side view of a system 1 according to the invention. The system 1 comprises a tractor 2 with a hitch 3, to which a mower 4 is connected, that has a frame 5 and one or more mowing discs 6 with one or more knives 7, the mowing height of which is adjustable via a height setter 8.

A camera is indicated with 9, and an ultrasonic, or ultrasound, sensor with 10. Crop on the field is diagrammatically indicated with a clover 11 and grass 12. Furthermore, a control device is indicated with reference numeral 13, while mown crop is indicated with 14.

The mowing system, which is here a towed mowing system, comprises a tractor, onto which a camera 9 is mounted. The camera images the field in front of it, together with its crop, in this case a mixture of grass 12 and clover 11. The image is processed in the control device 13, with which the camera is operatively connected. Hereby, e.g. a ratio between grass and clover is detected in the crop, such as based on average are of crop with certain optical properties. This may be based on leaf shape, colour, flowers, reflectivity, even non-visual properties such as (near)infrared properties and so on. In this way, the control device 13 can establish that the crop comprises e.g. 25% clover area and 75% grass area. Assume now that a higher percentage of clover is desired. That means that clover regrowth must be favoured over grass regrowth. This can be achieved by setting the mowing height to a value which is relatively low, such as 5 cm. Thereto, the control device 13 instructs the height setter 8, such as a hydraulical or electrical actuator, to set the mowing height of the mowing disc 6 with the knives 7 to 5 cm. The time for determining the desired height from the imaged crop and setting the mowing height is about equal to the distance between the middle of the camera image and the mower 4 divided by the forward speed of the tractor 2, which is a feasible time for modern image processing software and height setters.

In addition, the ultrasound sensor 10 may be used to determine the height of the crop to be mown, and in particular also a crop density. Thereby, total crop volume may be determined, and together with the set mowing height, the volume of the crop that is mown can be determined. Together with information from the camera 9 and the image processing, the control unit 13 can then determine the composition of the mown crop, based on crop volume, crop composition and nutritive contribution of the crop constituents (here: grass and clover). The latter may be based on samples or literature.

Figure 2 is a very diagrammatic top view of a system according to the invention. It shows a system 1 according to the invention with a mower 4, mowing a track 16 in a field 15. The camera 9 at the instant depicted detects a part 17 of the field with generally a clover rich crop, designated by the hatched area, and after that a clover poorer area 18, depicted by a crosshatched area. In order to reduce relative clover cover in the area 17, the mowing height may be set relatively lower, such as at about 7 cm, while to increase relative clover cover for the area 18, the mowing height may be set at about 5 cm. This shows that the present invention is able to manage the crop locally, based on detected composition, by adjusting mowing height.

## Claims

1. A mower system (1) for mowing a field (15) with a grass containing crop, and comprising:
- a frame (5),
- a mowing device (4) that is connected to the frame (5) and has an adjustable mowing height,
- a sensor device (9, 10) arranged to generate data based on a sensed parameter,
- a control device (13) that is operatively connected to the sensor device (9, 10) to receive the generated data, and is operatively connected to the mowing device (4) and arranged to adjust the mowing height on the basis of the received data, **characterized in that** the sensed parameter is a species composition related parameter of a part of the field (15).

2. The mower system (1) of claim 1, wherein the control device (13) is arranged to adjust the mowing height during mowing the field (15), in particular repeatedly or continuously on the basis of the received data.

3. The mower system (1) of claim 1 or 2, wherein the control device (13) is arranged to adjust the mowing height for the part of the field for which the parameter was sensed

4. The mower system (1) of any preceding claim, wherein the sensor device comprises a camera (9) that generates an image of the piece of the field (15), and an image processing device that processes the image and generates the data.

5. The mower system (1) of claim 4, wherein the image processing device is arranged to recognise at least one forage legume, in particular a clover species (11) and/or alfalfa and/or lucerne, in the image, more in particular also to recognize grass (12) in the image.

6. The mower system (1) of claim 4, wherein the sensor device comprises an additional sensor, in particular an ultrasound sensor (10) and/or an optical NIR sensor.

7. The mower system (1) of any preceding claim, wherein the species composition related parameter comprises a ratio, in particular a coverage ratio of the field, of at least one of a forage legume, in particular a clover (11) species and/or alfalfa and/or lucerne, to a grass (12), more in particular wherein the data reflects or comprises the ratio.

8. The mower system (1) of any preceding claim, wherein the control device (13) is arranged
- to contain a desired value or value range for the signal, in particular for the determined parameter value reflected by the data, more in particular for the ratio,
- to compare the data, in particular the determined parameter value, more in particular the ratio, and the desired value or value range, and
- to adjust the mowing height on the basis of the comparison.

9. The mower system (1) of claim 8, wherein the control device (13) is arranged to adjust the mowing height to a first mowing height value if the determined ratio is lower than a predetermined low threshold value, and to adjust the mowing height to a second mowing height value if the determined ratio is higher than a predetermined high threshold value, wherein the first mowing height is lower than the second mowing height.

10. The mower system (1) of claim 9, wherein the first mowing height is lower than 6 cm, in particular about 5 cm, and wherein the second mowing height is higher than 6 cm, in particular about 7 cm.

11. The mower system (1) of any preceding claim, wherein the mower (4) is a towable mower, arranged to be towed behind a towing vehicle (2).

12. The mower system (1) of any of claims 1-10, wherein the mower (4) is an autonomous mower, and comprises a propelling system for propelling the mower (4) over the field (15).

## Patentansprüche

1. Mähmaschinensystem (1) zum Mähen eines Felds (15) mit einem Gras enthaltenden Erntegut, und umfassend:
- einen Rahmen (5),
- eine Mähvorrichtung (4), die mit dem Rahmen (5) verbunden ist und eine einstellbare Mähhöhe aufweist,
- eine Sensorvorrichtung (9, 10), die angeordnet ist, Daten basierend auf einem erfassten Parameter zu erzeugen,
- eine Steuervorrichtung (13), die mit der Sensorvorrichtung (9, 10) wirkverbunden ist, um die erzeugten Daten zu empfangen, und mit der Mähvorrichtung (4) wirkverbunden und angeordnet ist, die Mähhöhe auf der Basis der empfangenen Daten anzupassen,
**dadurch gekennzeichnet, dass** der erfasste Parameter ein Parameter in Zusammenhang mit einer Artenzusammensetzung eines Teils des Felds (15) ist.

2. Mähmaschinensystem (1) nach Anspruch 1, wobei die Steuervorrichtung (13) angeordnet ist, die Mähhöhe während eines Mähens des Felds (15), insbesondere wiederholt oder fortlaufend auf der Basis der empfangenen Daten anzupassen.

3. Mähmaschinensystem (1) nach Anspruch 1 oder 2, wobei die Steuervorrichtung (13) angeordnet ist, die Mähhöhe für den Teil des Felds anzupassen, für den der Parameter erfasst wurde.

4. Mähmaschinensystem (1) nach einem der vorhergehenden Ansprüche, wobei die Sensorvorrichtung eine Kamera (9), die ein Bild des Stücks des Felds (15) erzeugt, und eine Bildverarbeitungsvorrichtung, die das Bild verarbeitet und die Daten erzeugt, umfasst.

5. Mähmaschinensystem (1) nach Anspruch 4, wobei die Bildverarbeitungsvorrichtung angeordnet ist, mindestens eine Futterleguminose, insbesondere eine Kleeart (11) und/oder Alfalfa und/oder Luzerne, in dem Bild zu erkennen, noch spezieller auch Gras (12) in dem Bild zu erkennen.

6. Mähmaschinensystem (1) nach Anspruch 4, wobei die Sensorvorrichtung einen zusätzlichen Sensor, insbesondere einen Ultraschallsensor (10) und/oder einen optischen NIR-Sensor, umfasst.

7. Mähmaschinensystem (1) nach einem der vorhergehenden Ansprüche, wobei der Parameter in Zusammenhang mit einer Artenzusammensetzung ein Verhältnis, insbesondere ein Bedeckungsverhältnis des Felds, mindestens einer einer Futterleguminose, insbesondere einer Klee(11)-Art und/oder Alfalfa und/oder Luzerne, zu einem Gras (12) umfasst, noch spezieller wobei die Daten das Verhältnis wiedergeben oder umfassen.

8. Mähmaschinensystem (1) nach einem der vorhergehenden Ansprüche, wobei die Steuervorrichtung (13) angeordnet ist,
- einen Sollwert oder Wertebereich für das Signal, insbesondere für den durch die Daten wiedergegebenen bestimmten Parameterwert, noch spezieller für das Verhältnis, zu enthalten,
- die Daten, insbesondere den bestimmten Parameterwert, noch spezieller das Verhältnis, und den Sollwert oder Wertebereich zu vergleichen, und
- die Mähhöhe auf der Basis des Vergleichs anzupassen.

9. Mähmaschinensystem (1) nach Anspruch 8, wobei die Steuervorrichtung (13) angeordnet ist, die Mähhöhe an einen ersten Mähhöhenwert anzupassen, wenn das bestimmte Verhältnis niedriger als ein vorbestimmter unterer Schwellenwert ist, und die Mähhöhe an einen zweiten Mähhöhenwert anzupassen, wenn das bestimmte Verhältnis höher als ein vorbestimmter oberer Schwellenwert ist, wobei die erste Mähhöhe niedriger als die zweite Mähhöhe ist.

10. Mähmaschinensystem (1) nach Anspruch 9, wobei die erste Mähhöhe niedriger als 6 cm, insbesondere ca. 5 cm, ist und wobei die zweite Mähhöhe höher als 6 cm, insbesondere ca. 7 cm, ist.

11. Mähmaschinensystem (1) nach einem der vorhergehenden Ansprüche, wobei die Mähmaschine (4) eine ziehbare Mähmaschine ist, die angeordnet ist, hinter einem Zugfahrzeug (2) gezogen zu werden.

12. Mähmaschinensystem (1) nach einem der Ansprüche 1-10, wobei die Mähmaschine (4) eine autonome Mähmaschine ist und ein Antriebssystem zum Antreiben der Mähmaschine (4) über das Feld (15) umfasst.

## Revendications

1. Système faucheur (1) pour faucher un champ (15) comportant une herbe contenant une culture, et comprenant :
- un châssis (5),
- un dispositif de fauche (4) qui est relié au châssis (5) et possède une hauteur de fauche réglable,
- un dispositif capteur (9, 10) conçu pour générer des données basées sur un paramètre capté,
- un dispositif de commande (13) qui est relié fonctionnellement au dispositif capteur (9, 10) pour recevoir les données générées, et est relié fonctionnellement au dispositif de fauche (4) et conçu pour régler la hauteur de fauche sur la base des données reçues,
**caractérisé en ce que** le paramètre capté est un paramètre lié à une composition d'espèce d'une partie du champ (15).

2. Système faucheur (1) selon la revendication 1, dans lequel le dispositif de commande (13) est conçu pour régler la hauteur de fauche au cours de la fauche du champ (15), plus particulièrement de façon répétée ou continue sur la base des données reçues.

3. Système faucheur (1) selon la revendication 1 ou 2, dans lequel le dispositif de commande (13) est conçu pour ajuster la hauteur de fauche pour la partie du champ pour laquelle le paramètre a été capté.

4. Système faucheur (1) selon l'une quelconque des revendications précédentes, dans lequel le dispositif capteur comprend une caméra (9) qui génère une image de la parcelle du champ (15), et un dispositif de traitement d'image qui traite l'image et génère les données.

5. Système faucheur (1) selon la revendication 4, dans lequel le dispositif de traitement d'image est conçu pour reconnaître au moins une légumineuse fourragère, plus particulièrement une espèce de trèfle (11) et/ou l'alfalfa et/ou la luzerne, dans l'image, plus particulièrement encore également pour reconnaître de l'herbe (12) dans l'image.

6. Système faucheur (1) selon la revendication 4, dans lequel le dispositif capteur comprend un capteur additionnel, plus particulièrement un capteur à ultrasons (10) et/ou un capteur optique proche infrarouge.

7. Système faucheur (1) selon l'une quelconque des revendications précédentes, dans lequel le paramètre lié à une composition d'espèce comprend un taux, plus particulièrement un taux de couverture du champ, d'au moins une d'une légumineuse fourragère, plus particulièrement d'une espèce de trèfle (11) et/ou de l'alfalfa et/ou de la luzerne, par rapport à une herbe (12), plus particulièrement encore dans lequel les données reflètent ou comprennent le taux.

8. Système faucheur (1) selon l'une quelconque des revendications précédentes, dans lequel le dispositif de commande (13) est conçu
- pour contenir une valeur souhaitée ou une plage de valeurs souhaitée pour le signal, plus particulièrement pour la valeur du paramètre déterminé reflétée par les données, plus particulièrement encore pour le taux,
- pour comparer les données, plus particulièrement la valeur du paramètre déterminé, plus particulièrement encore le taux, et la valeur souhaitée ou la plage de valeurs souhaitée, et
- pour régler la hauteur de fauche sur la base de la comparaison.

9. Système faucheur (1) selon la revendication 8, dans lequel le dispositif de commande (13) est conçu pour régler la hauteur de fauche à une première valeur de hauteur de fauche si le taux déterminé est inférieur à une valeur-seuil basse prédéterminée et pour régler la hauteur de fauche à une deuxième valeur de hauteur de fauche si le taux déterminé est supérieur à une valeur-seuil haute prédéterminée, la première hauteur de fauche étant inférieure à la deuxième hauteur de fauche.

10. Système faucheur (1) selon la revendication 9, dans lequel la première hauteur de fauche est inférieure à 6 cm, plus particulièrement d'environ 5 cm, et dans lequel la deuxième hauteur de fauche est supérieure à 6 cm, plus particulièrement d'environ 7 cm.

11. Système faucheur (1) selon l'une quelconque des revendications précédentes, dans lequel la faucheuse (4) est une faucheuse remorquable, conçue pour être remorquée derrière un véhicule de remorquage (2).

12. Système faucheur (1) selon l'une quelconque des revendications 1 à 10, dans lequel la faucheuse (4) est une faucheuse autonome, et comprend un système de propulsion destiné à propulser la faucheuse (4) sur le champ (15).
